# EUROPEAN PATENT APPLICATION

(11) **EP 1 637 358 A1**
(43) Date of publication of application: **22.03.2006**
(21) Application number: 04745294.1
(22) Date of filing: 25.05.2004
(51) Int. Cl.: B60C 11/16

(54) **PNEUMATIC TIRE**

(30) Priority: 26.05.2003 JP 2003147558
(71) Applicant: THE YOKOHAMA RUBBER CO., LTD., Tokyo 105-8685 (JP)
(72) Inventor: TOMATSU, Yuji,c/o The Yokohama Rubber Co., Ltd., Kanagawa 2548601 (JP)
(74) Representative: HOFFMANN EITLE
(86) International application number: PCT/JP2004/007085
(87) International publication number: WO 2004/103738

(57) **Abstract**

A pneumatic tire including a tread surface with the rotation direction of the tire specified to one direction, and studs having top ends exposed on the tread surface. The studs located in the center region of the tread surface are inclined in tire side view so that the top side of each of the studs is positioned downstream of the bottom side of the stud in the tire rotation direction, and each stud in the center region has an inclination angle α in the range from 5° to 45° with respect to a tire normal line passing the top end of the stud. The studs located in the shoulder region of the tread surface are inclined so that the top side of each of the studs is positioned downstream of the bottom side of the stud in the reverse rotation direction of the tire, and each stud in the shoulder region has an inclination angle β in the range from 5° to 45° with respect to a tire normal line passing the top end of the stud.

## Description

### TECHNICAL FIELD

The present invention relates to a pneumatic tire, and more specifically, to a pneumatic tire for ice and snow-covered roads that can improve ice and snow performances.

### BACKGROUND ART

As one of the pneumatic tires used on ice and snow-covered roads, there is a studded tire having studs embedded in the tread to improve ice and snow performance. In general, each of the studs is embedded parallel to the tire normal line, and the top ends of the studs are exposed on the tread surface; the studded tire ensures high braking and traction performance on ice and snow-covered road surfaces by the exposed top ends of the studs.

As a studded tire as described above, for example, Japanese patent application Kokai publication No. 57-134304 discloses a pneumatic tire which includes studs inclined in the reverse rotation direction of the tire to improve braking performance. Falling down of the studs is suppressed during braking, thereby increasing the braking effect of the studs.

However, when the studs are inclined in the reverse rotation direction of the tire as mentioned above, traction performance is reduced because the studs fall down during driving.

That is, ice and snow performances required to run on ice and snow-covered roads generally include braking performance, traction performance, and cornering performance, and there is a problem that, if any one of the performances is improved, the other performances are reduced. It is difficult to improve any one of the ice and snow performances without reducing the other performances.

### DISCLOSURE OF THE INVENTION

An object of the present invention is to provide a pneumatic tire that can improve ice and snow performances without causing the problem of performance reduction.

In order to achieve the above object, a pneumatic tire according to the present invention includes a tread surface with a rotation direction of the tire specified to one direction, and studs having top ends exposed on the tread surface, wherein, in tire side view, the studs located in a center region of the tread surface are inclined such that a top side of each of the studs is positioned downstream of a bottom side of the stud in the tire rotation direction, each stud in the center region has an inclination angle α in a range from 5° to 45° with respect to a tire normal line passing the top end of the stud, the studs located in a shoulder region of the tread surface are inclined such that a top side of each of the studs is positioned downstream of a bottom side of the stud in a reverse rotation direction of the tire, and each stud in the shoulder region has an inclination angle β in a range from 5° to 45° with respect to a tire normal line passing the top end of the stud.

The studs in the center region where ground contact pressure is higher during driving are inclined in the tire rotation direction as described above, whereby it is possible to suppress the studs from falling down towards the tire reverse rotation direction in the center region during driving. Accordingly, high traction performance on ice and snow-covered road surfaces can be obtained because of the inclined studs in the center region.

On the other hand, the studs in the shoulder region where ground contact pressure is higher during braking are inclined in the tire reverse rotation direction as described above, whereby it is possible to suppress the studs from falling down towards the tire rotation direction in the shoulder region during braking. Accordingly, braking performance on ice and snow-covered road surfaces can be enhanced because of the inclined studs in the shoulder region.

Since the studs are simply inclined in tire side view, cornering performance on ice and snow-covered road surfaces can be maintained at the same level as that of the prior art. It is therefore possible to enhance both braking performance and traction performances without reducing cornering performance on ice and snow-covered road surfaces.

Another pneumatic tire according to the present invention includes a tread surface and studs having top ends exposed on the tread surface, wherein the studs are inclined such that a top side of each of the studs is positioned more outward in a widthwise direction of the tire than a bottom side of the stud in tire meridian cross-sectional view, and each stud has an inclination angle θ1 in a range from 5° to 45° with respect to a tire normal line passing the top end of the stud.

The studs are inclined outward in the tire widthwise direction as described above, whereby it is possible to suppress falling down of the inclined studs on one side of the tire equator line when a large lateral force is applied during cornering. Accordingly, high cornering performance on ice and snow-covered road surfaces can be obtained because of the studs that are suppressed from falling down. Since the studs are simply inclined in tire meridian cross-sectional view, braking and traction performance on ice and snow-covered road surfaces can be maintained at the same level as that of the conventional tire. It is therefore possible to improve cornering performance without reducing braking and traction performance on ice and snow-covered road surfaces.

Still another pneumatic tire according to the present invention includes a tread surface and studs having top ends exposed on the tread surface, wherein the studs are inclined such that, when the tire is mounted on a vehicle, a top side of each of the studs is positioned nearer to an outer side of the vehicle than a bottom side of the stud in tire meridian cross-sectional view, and each stud has an inclination angle θ2 in a range from 5° to 45° with respect to a tire normal line passing the top end of the stud.

The studs are inclined toward the vehicle's outer side of the tire as described above, whereby it is possible to suppress the inclined studs from falling down when a large lateral force is applied to the tire toward the vehicle's outer side during cornering. Therefore, high cornering performance on ice and snow-covered road surfaces can be provided by the studs that are suppressed from falling down. Since the studs are simply inclined in tire meridian cross-sectional view, braking and traction performance on ice and snow-covered road surfaces can be maintained at the same level as that of the conventional tire. Thus, it is possible to improve cornering performance without reducing braking and traction performance on ice and snow-covered road surfaces.

### BRIEF DESCRIPTION OF THE DRAWINGS

Fig. 1 is a partial development view of the tread surface showing a first embodiment of the pneumatic tire of the present invention.
Fig. 2 is a partial cross-sectional view of the pneumatic tire of Fig. 1 taken along line II-II of Fig. 1.
Fig. 3 is a partial cross-sectional view of the pneumatic tire of Fig. 1 taken along line III-III of Fig. 1.
Fig. 4 is a cross-sectional view of the pneumatic tire of Fig. 1 taken along line IV-IV of Fig. 1.
Fig. 5 is a cross-sectional view showing a second embodiment of the pneumatic tire of the present invention, taken in a plane that contains the axis of rotation of the tire.
Fig. 6 is a partial cross-sectional view of the pneumatic tire of Fig. 5.
Fig. 7 is a cross-sectional view showing a third embodiment of the pneumatic tire of the present invention, taken in a plane that contains the axis of rotation of the tire.
Fig. 8 is a partial cross-sectional view of the pneumatic tire of Fig. 7.

### BEST MODES FOR CARRYING OUT THE INVENTION

Embodiments of the present invention will be described below in detail with reference to the accompanying drawings. The same components are assigned the same reference numerals, and redundant description will be omitted.

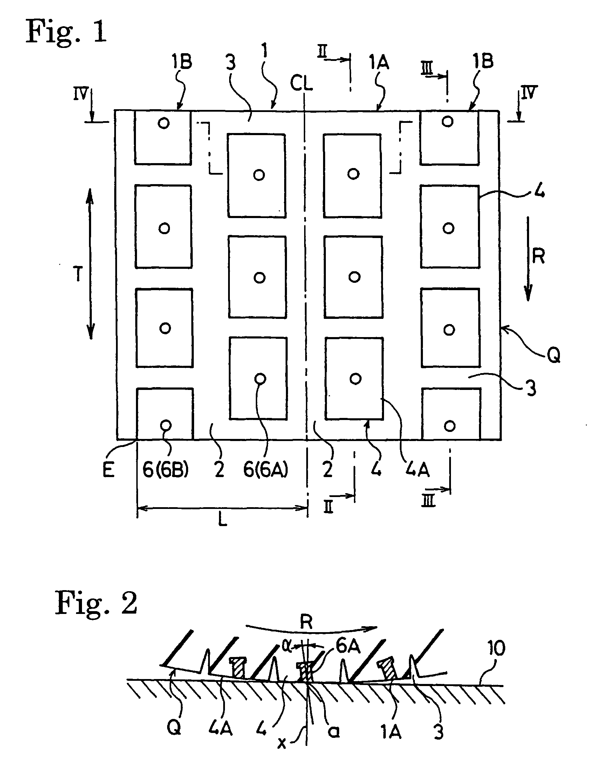

Referring to Fig. 1, there is shown a first embodiment of a pneumatic tire according to the present invention. The tread Q includes a tread surface 1 with a tire rotation direction R specified to one direction. The tread surface 1 has a plurality of circumferential grooves 2 extending in the circumferential direction T of the tire. Lateral grooves 3 that extend in the widthwise direction of the tire are arranged at predetermined intervals in the tire circumferential direction T, and blocks 4 are defined by the circumferential grooves 2 and the lateral grooves 3 in the tread surface 1.

Each of the blocks 4 has a tread surface section 4A, and a stud 6 is embedded in the block 4 with its top end exposed on the tread surface section (tread surface 1). The studs 6A located in the center region 1A of the tread surface 1 are inclined such that the top side of each stud 6A is positioned downstream of the bottom side (embedded side) of the stud 6A in the tire rotation direction R in tire side view seeing the cross-section of Fig. 2 from the side of the tire. Each of the studs 6A has an inclination angle α in the range from 5° to 45° with respect to a tire normal line x passing the center (stud center) a of the top end of the stud 6A. Reference numeral 10 in Fig. 2 denotes a road surface.

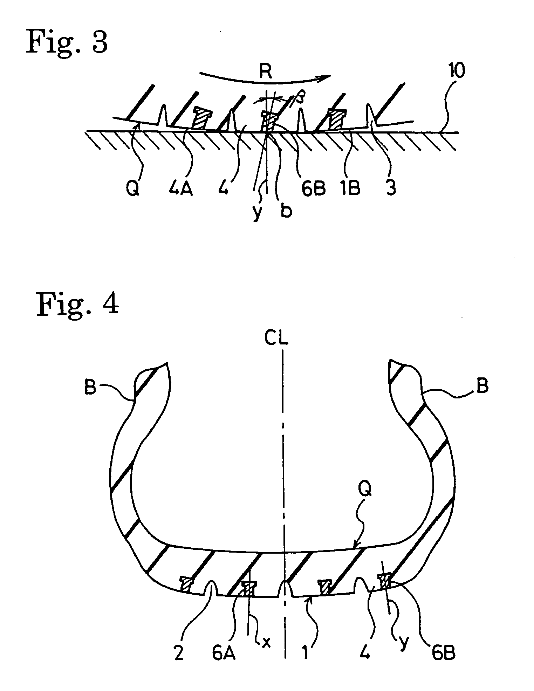

The studs 6B located in each of the shoulder regions 1B of the tread surface 1 are inclined such that the top side of each stud 6B is positioned downstream of the bottom side (embedded side) of the stud 6B in the tire reverse rotation direction in tire side view seeing the cross-section of Fig. 3 from the side of the tire. Each of the studs 6B has an inclination angle β in the range from 5° to 45° with respect to a tire normal line y passing the center (stud center) b of the top end of the stud 6B.

The studs 6A and 6B are not inclined but extend parallel to the tire normal lines x and y, respectively, in tire meridian cross-sectional view seeing the cross-section of the tire taken in a plane that contains the axis of rotation of the tire as shown in Fig. 4.

Materials of which the studs 6A and 6B are formed may be conventionally known materials, and the examples thereof preferably include metal and resin.

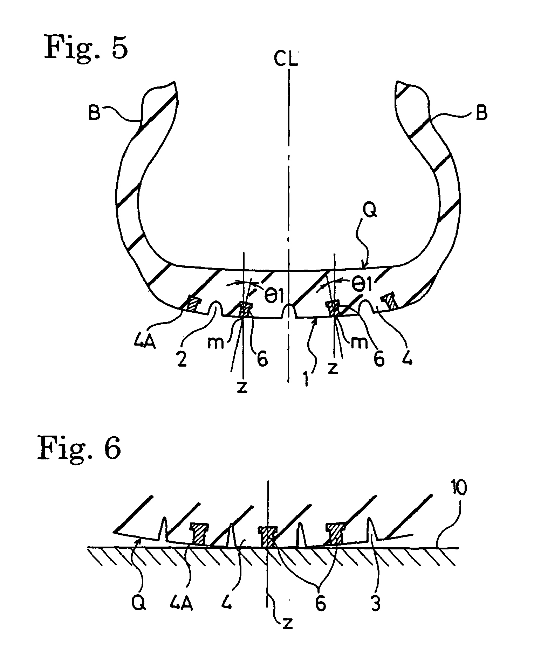

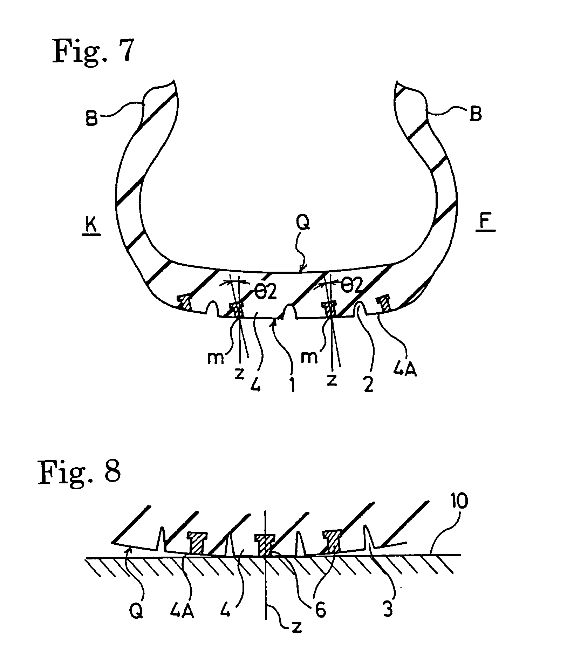

In Fig. 4, the tire is shown in such a state that the constituent members of the tire such as a carcass ply, belt plies and the like are omitted and only the studs 6 are provided in the blocks. However, the pneumatic tire of the present invention includes a carcass ply extending between right and left beads B, and the opposing ends thereof are folded outward from the inner side of the tire around bead cores embedded in the beads. Belt plies are disposed radially outwardly of the carcass ply in the tread Q. The same applies to Figs. 5 and 7 described later.

The center region 1A of the tread surface 1 referred here is a region between positions of at least L/3 but less than 2L/3 leftwards and rightwards from the tire equator line CL, where L (mm) is the tread developed width from the tire equator line CL to a ground contact end E of the tire. The shoulder regions 1B are regions from the positions of 2L/3 leftwards and rightwards from the tire equator line CL to the tire ground contact ends E. The tire normal line is a normal line with respect to the tread surface.

It is generally known that the ground contact pressure distribution of the tread surface 1 of a pneumatic tire during driving and braking is such that the pressure is relatively higher in the center side during driving and higher in the shoulder sides during braking. The center side of the tread surface 1 greatly affects traction performance and the shoulder sides greatly affect braking performance.

Based on the above knowledge, the pneumatic tire of the present invention described above is configured such that the studs 6A in the center region 1A are inclined in the tire rotation direction R at the inclination angle α in the aforementioned range and the studs 6B in the shoulder regions 1B are inclined in the tire reverse rotation direction at the inclination angle β in the aforementioned range.

This can suppress falling down of the studs 6A towards the tire reverse rotation direction in the center region 1A during driving. Accordingly, traction performance on ice and snow-covered road surfaces can be enhanced by the studs 6A. On the other hand, it is possible to suppress falling down of the studs 6B towards the tire rotation direction R in the shoulder regions 1B during braking. Therefore, high braking performance on ice and snow-covered road surfaces can be obtained by the studs 6B.

The studs 6A and 6B are not inclined but extend parallel to the tire normal lines x and y in tire meridian cross-sectional view. Accordingly, cornering performance on ice and snow-covered road surfaces can be maintained at the same level as that of the conventional tire. It is therefore possible to enhance both braking performance and traction performance without reducing cornering performance. The ice and snow performances can thus be improved without the problem of performance reduction.

If the inclination angle α is less than 5° or more than 45°, traction performance can not effectively be improved. If the inclination angle β is less than 5° or more than 45°, braking performance can not effectively be improved.

Referring to Fig. 5, there is shown a second embodiment of a pneumatic tire according to the present invention. The tread surface 1 is a tread surface with a tire rotation direction not specified. The studs 6 embedded with the top ends exposed on the tread surface sections 4A of the blocks 4 are inclined such that the top sides of the studs 6 are positioned more outward in the tire widthwise direction than the bottom sides in tire meridian cross-sectional view as shown in Fig. 5. Each of the studs 6 has an inclination angle θ1 in the range from 5° to 45° with respect to a tire normal line z passing the center (stud center) m of the top end of the stud 6.

The studs 6 are not inclined but extend parallel to the tire normal lines z in tire side view as shown in Fig. 6.

The studs 6 are inclined outward in the tire widthwise direction at the inclination angle θ1 in the aforementioned range as described above, whereby it is possible to suppress falling down of the inclined studs 6 on one side of the tire equator line CL when a large lateral force is applied during cornering. Accordingly, high cornering performance on ice and snow-covered road surfaces can be provided because of the studs 6 that are suppressed from falling down. Since the studs 6 are not inclined but extend parallel to the tire normal lines z in tire side view, braking and traction performance can be maintained at the same level as that of the conventional tire. It is therefore possible to improve cornering performance without reducing braking and traction performance on ice and snow-covered road surfaces.

If the inclination angle θ1 is less than 5° or more than 45°, cornering performance can not effectively be improved.

Referring to Fig. 7, there is shown a third embodiment of a pneumatic tire according to the present invention. This pneumatic tire has a specified orientation when it is mounted on a vehicle, and is mounted thereon with side F on the outer side of the vehicle and side K on the inner side of the vehicle. The tread surface 1 is a tread surface with a tire rotation direction not specified.

The studs 6 embedded with the top ends exposed on the tread surface sections 4A of the blocks 4 are inclined such that, when the tire is mounted on a vehicle, the top sides of the studs 6 are positioned nearer to the vehicle's outer side (side F) than the bottom sides of the studs 6 in tire meridian cross-sectional view as shown in Fig. 7. Each of the studs 6 has an inclination angle θ2 in the range from 5° to 45° with respect to a tire normal line z passing the center (stud center) m of the top end of the stud 6.

The studs 6 are not inclined but extend parallel to the tire normal lines z in tire side view as shown in Fig. 8.

In the pneumatic tire whose orientation for mounting is specified as described above, the studs 6 are inclined toward the vehicle's outer side at the inclination angle θ2 in the aforementioned range, whereby it is possible to suppress falling down of the inclined studs 6 when a large lateral force is applied to the tire toward the vehicle's outer side during cornering. Accordingly, high cornering performance on ice and snow-covered road surfaces can be obtained because of the studs 6. Since the studs 6 are not inclined but extend parallel to the tire normal lines z, braking and traction performance can be maintained at the same level as that of the conventional tire. It is therefore possible to improve cornering performance on ice and snow-covered road surfaces without reducing braking and traction performance.

If the inclination angle θ2 is less than 5° or more than 45°, it is difficult to effectively improve cornering performance.

In the present invention, it is preferred that the first embodiment shown in Figs. 2 and 3 and the second embodiment shown in Fig. 5 be combined, or the first embodiment shown in Figs. 2 and 3 and the third embodiment shown in Fig. 7 be combined. In other words, it is preferable that the studs 6 be inclined as described above in tire side view as well as in tire meridian cross-sectional view. This can simultaneously improve the three, that is, traction performance, braking performance, and cornering performance on ice and snow-covered road surfaces.

### Example 1

Prepared were test tires according to the present invention tires 1 to 4, comparison tires 1 and 2, and conventional tires 1 and 2, each having a tire size of 195/65R13 and a structure shown in Fig. 1, in which the inclination angles α and β of the studs in the center and shoulder regions of the tread surface were set as shown in Table 1. The inclination angles θ1 and θ2 of each test tire were 0°.

These test tires were seated on rims with a size of 6.0J, inflated to a pressure of 200kPa, and then mounted on a rear-wheel drive vehicle (test vehicle) of 2000 cc displacement; evaluation testing for braking performance, traction performance and cornering performance were conducted by the following measurement methods, thus obtaining the results shown in Table 1.

### Braking Performance

In a test course for ice and snow-covered roads, the test vehicle was run at a speed of 40 km/h, and the brake stopping distance by full braking was measured. The measured results were represented by an index where the conventional tire 1 is 100. As the index value is greater, braking performance is better.

### Traction Performance

In a test course for ice and snow-covered roads, the test vehicle was started and acceleratively run to a distance of 50 m, and the period of time reaching the distance was measured. The measured results were represented by an index where the conventional tire 1 is 100. As the index value is greater, traction performance is better.

### Cornering Performance

In a test course for ice and snow-covered roads, feeling evaluation was performed by a test driver when the test vehicle was run at a speed of 40 km/h, and the results thereof were represented by an index where the conventional tire 1 is 100. As the index value is greater, cornering performance is better.

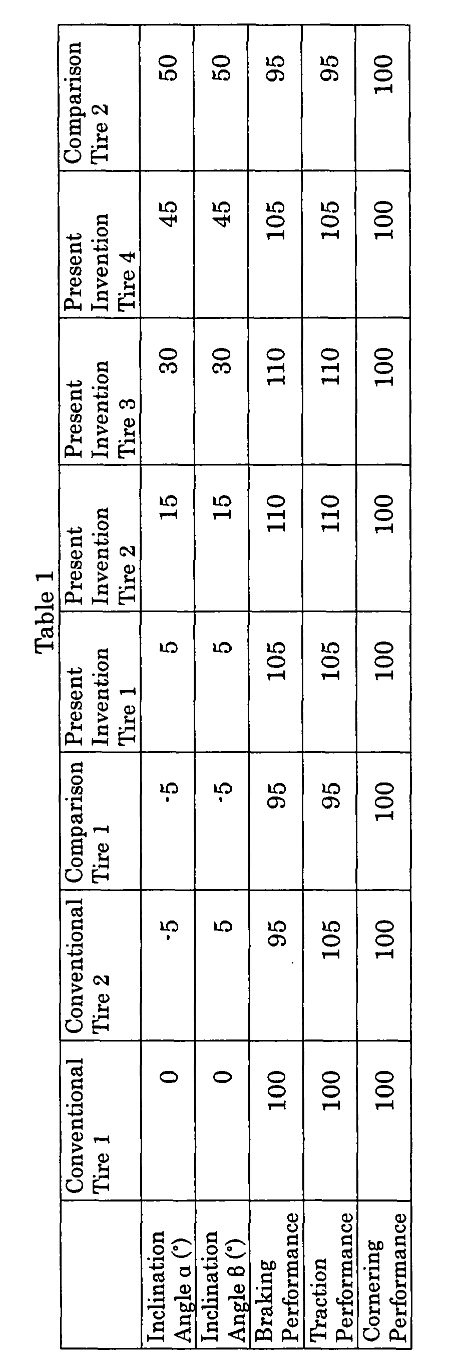

As can be seen from Table 1, the present invention tires can improve braking performance and traction performance while cornering performance is maintained at the same level as that of the conventional tire.

### Example 2

Prepared were test tires according to the present invention tires 5 to 9 and comparison tire 3, each having a tire size and tread pattern as in Example 1 and a structure shown in Fig. 5, in which the inclination angle θ1 of each stud was set as shown in Table 2. In the present invention tires 5 to 8 and the comparison tire 3, the respective inclination angles α and β of the studs in the center and shoulder regions were 0°. The inclination angles α and β of the present invention tire 9 were 5°, respectively.

These test tires were subjected to evaluation testing for braking performance, traction performance and cornering performance as in Example 1, and the results shown in Table 2 were obtained.

**Table 2**

| | Present Invention Tire 5 | Present Invention Tire 6 | Present Invention Tire 7 | Present Invention Tire 8 | Present Invention Tire 9 | Comparison Tire 3 |
|---|---|---|---|---|---|---|
| Inclination Angle θ1 (°) | 5 | 15 | 30 | 45 | 5 | 50 |
| Braking Performance | 100 | 100 | 100 | 100 | 105 | 100 |
| Traction Performance | 100 | 100 | 100 | 100 | 105 | 100 |
| Cornering Performance | 105 | 110 | 110 | 105 | 105 | 95 |

As can be seen from Table 2, the present invention tires 4 to 8 with the studs inclined outward in the tire widthwise direction at inclination angles in the range of 5° to 45° can improve cornering performance while braking performance and driving performance are maintained at the same levels as those of the conventional tire.

The present invention tire 9 with features of the combination of the first embodiment and the second embodiment can improve the three, that is, traction performance, braking performance and cornering performance at the same time.

### INDUSTRIAL APPLICABILITY

The pneumatic tire of the present invention having the aforementioned excellent effect can be very effectively utilized as a pneumatic tire for ice and snow-covered roads.

## Claims

1. A pneumatic tire including a tread surface with a rotation direction of the tire specified to one direction, and studs having top ends exposed on the tread surface,
wherein, in tire side view, the studs located in a center region of the tread surface are inclined such that a top side of each of the studs is positioned downstream of a bottom side of the stud in the tire rotation direction, each stud in the center region has an inclination angle α in a range from 5° to 45° with respect to a tire normal line passing the top end of the stud, the studs located in a shoulder region of the tread surface are inclined such that a top side of each of the studs is positioned downstream of a bottom side of the stud in a reverse rotation direction of the tire, and each stud in the shoulder region has an inclination angle β in a range from 5° to 45° with respect to a tire normal line passing the top end of the stud.

2. The pneumatic tire according to claim 1, wherein the inclined studs extend parallel to the tire normal lines passing the top ends of the studs in tire meridian cross-sectional view.

3. The pneumatic tire according to claim 1, wherein the inclined studs are inclined such that the top side of each of the studs is positioned more outward in a widthwise direction of the tire than the bottom side of the stud in tire meridian cross-sectional view.

4. The pneumatic tire according to claim 3, wherein each of the inclined studs which are inclined such that the top sides are positioned more outward in the tire widthwise direction has an inclination angle θ1 in a range from 5° to 45° with respect to the tire normal line passing the top end of the stud.

5. The pneumatic tire according to claim 1, wherein the inclined studs are inclined such that, when the tire is mounted on a vehicle, the top side of each of the studs is positioned nearer to an outer side of the vehicle than the bottom side of the stud in tire meridian cross-sectional view.

6. The pneumatic tire according to claim 5, wherein each of the inclined studs which are inclined such that the top sides are positioned nearer to the vehicle's outer side has an inclination angle θ2 in a range from 5° to 45° with respect to the tire normal line passing the top end of the stud.

7. The pneumatic tire according to any one of claims 1 to 6, wherein the tread surface has blocks defined by circumferential grooves extending in a circumferential direction of the tire and lateral grooves extending in a widthwise direction of the tire, and the top end of each of the studs is exposed on a tread surface section of each of the blocks.

8. A pneumatic tire including a tread surface and studs having top ends exposed on the tread surface,
wherein the studs are inclined such that a top side of each of the studs is positioned more outward in a widthwise direction of the tire than a bottom side of the stud in tire meridian cross-sectional view, and each stud has an inclination angle θ1 in a range from 5° to 45° with respect to a tire normal line passing the top end of the stud.

9. The pneumatic tire according to claim 8, wherein each of the inclined studs extends parallel to the tire normal line passing the top end of the stud in tire side view.

10. The pneumatic tire according to any one of claims 8 and 9, wherein the tread surface has blocks defined by circumferential grooves extending in a circumferential direction of the tire and lateral grooves extending in a widthwise direction of the tire, and the top end of each of the studs is exposed on a tread surface section of each of the blocks.

11. A pneumatic tire including a tread surface and studs having top ends exposed on the tread surface,
wherein the studs are inclined such that, when the tire is mounted on a vehicle, a top side of each of the studs is positioned nearer to an outer side of the vehicle than a bottom side of the stud in tire meridian cross-sectional view, and each stud has an inclination angle θ2 in a range from 5° to 45° with respect to a tire normal line passing the top end of the stud.

12. The pneumatic tire according to claim 11, wherein each of the inclined studs extends parallel to the tire normal line passing the top end of the stud in tire side view.

13. The pneumatic tire according to any one of claims 11 and 12, wherein the tread surface has blocks defined by circumferential grooves extending in a circumferential direction of the tire and lateral grooves extending in a widthwise direction of the tire, and the top end of each of the studs is exposed on a tread surface section of each of the blocks.
